# EUROPEAN PATENT APPLICATION

(11) **EP 1 852 241 A2**
(43) Date of publication of application: **07.11.2007**
(21) Application number: 07107538.6
(22) Date of filing: 04.05.2007
(51) Int. Cl.: B29C 59/16, B29C 71/04, B29C 35/08, B44C 1/00, B44D 5/00

(54) **Method for increasing the light transmission of a thermoplastic material layer, and thus processed material layer**

(30) Priority: 04.05.2006 NL 2000070
(71) Applicant: Perfect Foil B.V., 5145 NK Waalwijk (NL)
(72) Inventor: Braun, Herbert Freddy, 5263 EN, Vught (NL)
(74) Representative: Eveleens Maarse, Pieter

(57) **Abstract**

The present invention relates to a method for increasing the light transmission of a thermoplastic material layer by irradiating a surface of the material layer and subsequently curing the thermoplastic surface layer. The invention also relates to a thermoplastic light-transmitting material layer processed with a laser beam in accordance with such a method.

## Description

The present invention relates to a method for increasing the light transmission of a thermoplastic material layer, and to a thermoplastic material layer processed using such a method. The present invention also relates to light-transmitting window material manufactured from a processed thermoplastic material layer.

The application of thermoplastic material layers in conditions where use is made of the light transmission of the material is generally known. Such known applications are formed by, among others, windows in the automotive sector, i.e. windows which form part of vehicles, boats and/or aircraft. More specific examples are the application of a thermoplastic material layer as window in a removable hood in a convertible and in the sail of a sailboat. Another application of light-transmitting (transparency-providing) thermoplastic material is found in draught doors or doors with which conditioned spaces are screened off such that they are readily accessible. It is for instance possible here to envisage more specifically passageways which are screened off by a number of material strips positioned substantially in the same plane. Other mobile and stationary applications of the thermoplastic material can however also be envisaged.

Existing applications are usually technically simple and can be implemented at relatively limited cost. The drawback of the existing, thus applied light-transmitting thermoplastic material layers is that, in view of the thicknesses required for strength purposes and the specific use, they often provide a limited transparency and this limited view decreases still further during use. Particularly in applications where the degree of transparency represents an important factor, as is usually the case in applications with windows, this can represent a significant limitation in the options for use. A limited view (a limited transparency) can also result in safety hazards because an obscured or impeded view through a screen manufactured from a light-transmitting thermoplastic material layer increases the danger of incorrect, incomplete or too late an assessment of a determined situation.

The object of the invention is therefore to provide a light-transmitting thermoplastic material layer with an improved transparency and/or an increased light transmission compared to similar prior art thermoplastic material layers. The present invention also has for its object to provide a method for increasing the light transmission of a thermoplastic material layer.

The invention provides for this purpose a method for increasing the light transmission of a thermoplastic material layer by: A) irradiating a surface of the material layer with a laser beam such that the thermoplastic material layer becomes at least partially liquid on one side as a result of the irradiation, and B) subsequently curing the liquid thermoplastic material. A very significant advantage of applying the present simple method is that the material is optically polished, in other words the clarity or light transmission of the material is increased. As a result of the proposed method, and more particularly the irradiation by laser light, the structure of the material that is made liquid will change, for instance in the form of recrystallization and/or cross-linking of the material, such that, after undergoing the method, the material can have improved properties such as an increased scratch resistance, an increased hardness and/or a greater UV-resistance. The processed material will hereby have an increased lifespan compared to the starting material, and the properties of the material are also superior during this period of time. The shrinkage of the material can thus also be reduced to for instance a maximum of 3% at temperature fluctuations within a temperature range of -25°C to 40°C.

The method can be performed such that during processing step A) only the surface of the thermoplastic material layer directed toward the laser beam becomes liquid. That is, the material layer does not become liquid through and through: only the top layer is liquid. The laser beam herein preferably encloses an angle with the thermoplastic material layer of 65 to 80°, more preferably an angle of 70 to 75°, and most preferably an angle of about 73.2°. This angle is also referred to as the target angle of the laser beam.

Advantageous results are particularly achieved if the material layer comprises at least one polymer, such as for instance PVC. Typical thicknesses of the material layer, and more particularly material layers in applications as referred to in this application, lie in the range of 300 µm to 1 mm.

Alternatively, it is also possible for the material layer processed with a laser beam to be joined together with at least one other material layer. A multi-layered product is thus obtained which may be desirable for specific applications of the thermoplastic material layer. It is also possible here for all material layers which are joined together to consist of thermoplastic material layers processed with a laser beam.

The method can be performed quickly: the processing steps A) and B) need take locally less than 0.5 s, more preferably less than 0.3 s. That is, a specific position on the thermoplastic material layer, from an untreated state, is once again in a cured state after 0.5 or 0.3 seconds.

In yet another embodiment variant of the present method an additional coating is applied over the cured material layer after curing of the thermoplastic material layer according to processing step B). The processed surface of the thermoplastic material layer can thus be protected.

Subject to the desired use of thermoplastic material layer, one or two sides can be irradiated by a laser beam as required.

The present invention also provides a thermoplastic light-transmitting material layer processed with a laser beam in accordance with a method as described above. This material layer preferably comprises PVC, and more particularly the PVC layer is herein plasticized with a softening agent. Examples of softening agents with which favourable results have been achieved in applying the present method are DOP (di-octyl-phthalate) and Dinp (PVC anorak diisononyl phthalate). In addition, tests have indicated that results are satisfactory when a PVC layer with a K-value of 68-70 is used. The K-value herein represents a quantity of the measure of polymerization or molecule size. The material layer preferably has a thickness in the range of 300 µm to 1 mm, a typical thickness for applications as will be further described hereinbelow. After curing the average crystallite of the material layer can be smaller than the average crystallite of the material layer before the start of the laser beam processing.

In yet another variant of the method only a part of a side of the light-transmitting material layer is processed with a laser beam such that there remains in the material layer a pattern of processed and unprocessed surface parts. "Clearer" layer parts can thus be alternated with less clear layer parts. It is thus possible to arrange patterns, logos, names or randomly formed figures in a thermoplastic material layer. Such images can be arranged for functional reasons or only for aesthetic or advertising reasons.

The present invention moreover also provides a light-transmitting multiple material layer formed from a stack of at least two material layers, wherein at least one material layer is formed by a thermoplastic light-transmitting material layer as described above. It is for instance possible to opt for a multiple material layer in applications where a very thick material layer is desirable (for instance for the desired strength or thermal insulation).

The thermoplastic material layer processed according to the present invention can for instance be advantageously incorporated in a window of the hood of a convertible, a sail of a boat, a tarpaulin, a (protective) sleeve, a tent cloth, a curtain, an item of clothing and so forth.

The present invention will be further elucidated on the basis of the non-limitative exemplary embodiments shown in the following figures. Herein:
figure 1 shows a schematic three-dimensional view of a device for performing the method according to the present invention,
figure 2A is a perspective view of a convertible provided with a hood incorporating a thermoplastic light-transmitting material layer according to the invention,
figure 2B is a perspective view of a tent provided with windows formed by a thermoplastic light-transmitting material layer according to the invention,
figure 2C is a perspective view of a sailboat provided with sails incorporating thermoplastic light-transmitting material layers according to the invention,
figure 3A is a top view of a part of a thermoplastic light-transmitting material layer according to the invention in which letter-shaped parts have not been irradiated, and
figure 3B shows a top view of an alternative embodiment variant of a part of a thermoplastic light-transmitting material layer according to the invention in which specific parts have not been irradiated.

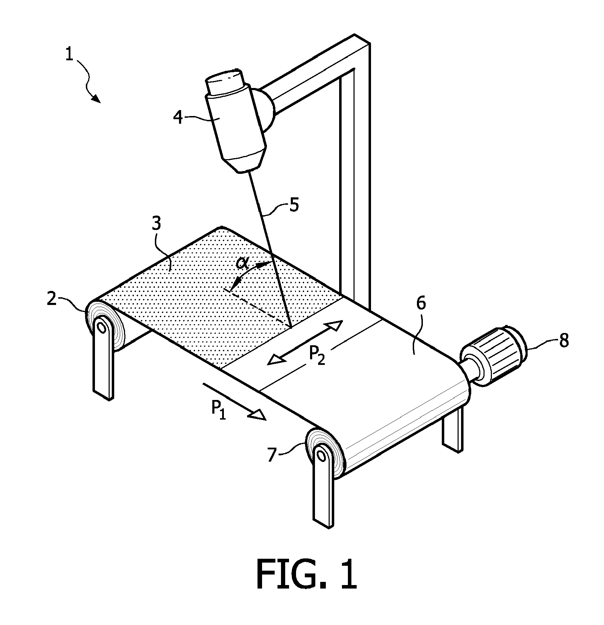

Figure 1 shows a device 1 for increasing the light transmission of a thermoplastic material layer 3 supplied from a roll 2 by means of irradiation by a laser beam 5 from a radiation source 4. Laser beam 5 herein encloses an angle α of about 73.2° with the thermoplastic material layer 3. This angle α is also referred to as the target angle α of laser beam 5 in the direction P₁ in which the thermoplastic material layer 3 is being advanced. In order to irradiate the whole surface of thermoplastic material layer 3 the laser beam 5 is (reciprocally) moved intermittently as indicated by means of arrow P₂. The irradiated thermoplastic material 6 is clearer than the material 3 not yet irradiated by laser beam 5. The clearer thermoplastic material 6 is wound onto a roll 7 driven for this purpose by a motor 8.

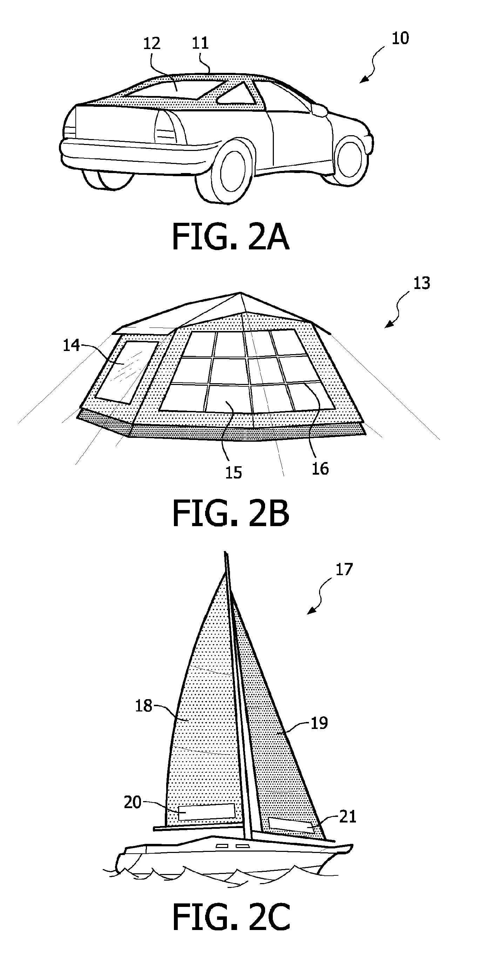

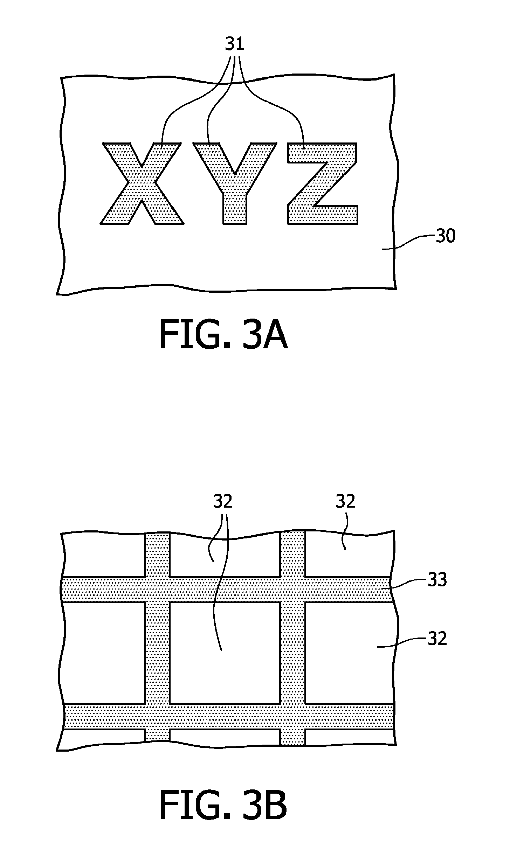

Figure 2A shows a car 10 with a removable hood 11 of a flexible material in which a clearer thermoplastic light-transmitting material layer according to the present invention is placed as rear window. Figure 2B shows a tent 13 in which windows 14, 15 are arranged which are advantageously formed by the light-transmitting material layer according to the present invention. Window 15 is herein provided with a pattern 16 which divides window 15 into small segments. This pattern can for instance be printed on window 15. It is however also possible to arrange pattern 16 during irradiation of window 15 with laser light, see also herefor the description below relating to figure 3B. Figure 2C shows a sailboat 17 wherein a clearer thermoplastic light-transmitting material layer according to the present invention is placed in respectively mainsail 18 and foresail 19 in order to form the respective windows 20 and 21. For all windows 12, 14, 15, 20, 21 shown in figures 2A, 2B and 2C it is the case that, because of the specific application in which the mechanical load on windows 12, 14, 15, 20, 21 is considerable, it is advantageous if windows 12, 14, 15, 20, 21 have a great clarity. Furthermore, it is also very desirable, because of the mechanical load on windows 12, 14, 15, 20, 21, for these to have an increased resistance to damage (for instance in the form of scratches).

Figure 3A shows a part of an irradiated thermoplastic light-transmitting material layer 30 which as a result has a high degree of clarity. The letter-shaped parts (X Y Z) 31 are not however irradiated and will therefore have a lesser clarity than the irradiated part of material layer 30. The letter-shaped parts (X Y Z) 31 will thus stand out as less clear parts in a clearer surrounding. A similar effect is shown in figure 3B in which a gridlike part 33 has remained unirradiated in an irradiated thermoplastic light-transmitting material layer 32 and thus stands out. There are of course numerous functional, ascetic and commercial possibilities which can be envisaged in which clear and less clear parts of a thermoplastic light-transmitting material layer alternate with each other.

## Claims

1. Method for increasing the light transmission of a thermoplastic material layer by:
A) irradiating a surface of the material layer with a laser beam such that the thermoplastic material layer becomes at least partially liquid on one side as a result of the irradiation, and
B) subsequently curing the liquid thermoplastic material.

2. Method as claimed in claim 1, **characterized in that** during processing step A) only the surface of the thermoplastic material layer directed toward the laser beam becomes liquid.

3. Method as claimed in claim 1 or 2, **characterized in that** the laser beam encloses an angle with the thermoplastic material layer of 65 to 80°.

4. Method as claimed in claim 3, **characterized in that** the laser beam encloses an angle of 70 to 75° with the side of the material layer directed toward the laser beam.

5. Method as claimed in claim 4, **characterized in that** the laser beam encloses an angle of about 73.2° with the side of the material layer directed toward the laser beam.

6. Method as claimed in any of the foregoing claims, **characterized in that** the material layer comprises at least one polymer, such as for instance PVC.

7. Method as claimed in any of the foregoing claims, **characterized in that** the material layer has a thickness in the range of 300 µm to 1 mm.

8. Method as claimed in any of the foregoing claims, **characterized in that** the material layer processed with a laser beam is joined together with at least one other material layer.

9. Method as claimed in claim 8, **characterized in that** all the material layers which are joined together consist of thermoplastic material layers processed with a laser beam.

10. Method as claimed in any of the foregoing claims, **characterized in that** the processing steps A) and B) require locally less than 0.5 s, more preferably less than 0.3 s.

11. Method as claimed in any of the foregoing claims, **characterized in that** an additional coating is applied over the cured material layer after curing of the thermoplastic material layer according to processing step B).

12. Method as claimed in any of the foregoing claims, **characterized in that** the thermoplastic material layer is irradiated by a laser beam on two sides.

13. Thermoplastic light-transmitting material layer processed with a laser beam as claimed in any of the foregoing claims.

14. Thermoplastic light-transmitting material layer as claimed in claim 13, **characterized in that** the material layer comprises PVC.

15. Thermoplastic light-transmitting material layer as claimed in claim 14, **characterized in that** the PVC layer is plasticized with a softening agent.

16. Thermoplastic light-transmitting material layer as claimed in claim 14 or 15, **characterized in that** the PVC layer has a K-value of 68-70.

17. Thermoplastic light-transmitting material layer as claimed in any of the claims 13-16, **characterized in that** the material layer has a thickness in the range of 300 µm to 1 mm.

18. Thermoplastic light-transmitting material layer as claimed in any of the claims 13-17, **characterized in that** the average crystallite of the material layer after curing is smaller than the average crystallite of the material layer before the start of the laser beam processing.

19. Thermoplastic light-transmitting material layer as claimed in any of the claims 13-18, **characterized in that** only a part of a side of the light-transmitting material layer is processed with a laser beam such that there remains in the material layer a pattern of processed and unprocessed surface parts.

20. Light-transmitting multiple material layer formed from a stack of at least two material layers, wherein at least one material layer is formed by a thermoplastic light-transmitting material layer as claimed in any of the claims 13-19.

21. Window comprising a light-transmitting material layer as claimed in any of the claims 13-19.
